# EUROPÄISCHE PATENTANMELDUNG

(11) **EP 2 985 893 A1**
(43) Veröffentlichungstag der Anmeldung: **17.02.2016**
(21) Anmeldenummer: 14002810.1
(22) Anmeldetag: 12.08.2014
(51) Int. Cl.: H02K 21/02, H02K 7/12, F16C 32/06

(54) **Elektrische Maschine mit Luftspaltkontrolle**

(71) Anmelder: LEANTEC Motor GmbH & Co. KG, 07318 Saalfeld (DE)
(72) Erfinder: Hein, Sören, Dr., 80538 München (DE)
(74) Vertreter: Steiniger, Carmen

(57) **Zusammenfassung**

Die Anmeldung betrifft eine elektrische Maschine mit mindestens einem Stator (2) und einem Rotor (1), wobei der Stator (2) mindestens zwei Statorsegmente (2) umfasst, und wobei der Rotor (1) mit einer Rotorwelle verbunden ist, wobei der Rotor (1) oder die Rotorwelle in einer Lagerung drehbar gelagert sind und wobei die Statorsegmente (2) in Rotationsrichtung des Rotors (1) relativ zu der Lagerung unbeweglich angeordnet sind. Aber mindestens eines der Statorsegmente (2) ist in axialer oder radialer Richtung relativ zu der Lagerung beweglich angeordnet, um die Breite des Luftspalts zwischen Rotor und Statorsegmenten einzustellen.

## Beschreibung

Die Erfindung betrifft eine elektrische Maschine mit einem Stator und einem Rotor, wobei der Stator mindestens zwei Statorsegmente umfasst, und wobei der Rotor mit einer Rotorwelle verbunden ist, wobei der Rotor und/oder die Rotorwelle in einer Lagerung drehbar gelagert sind, und wobei die Statorsegmente in Rotationsrichtung des Rotors relativ zu der Lagerung unbeweglich angeordnet sind. Ferner bezieht sich die Erfindung auf ein Verfahren zum Betreiben einer elektrischen Maschine, welche einen Stator und einen Rotor besitzt, und wobei der Rotor mit einer Rotorwelle verbunden ist, wobei der Rotor und/oder die Rotorwelle in einer Lagerung drehbar gelagert sind, wobei der Stator mindestens zwei Statorsegmente umfasst, welche in Rotationsrichtung des Rotors relativ zu der Lagerung unbeweglich angeordnet sind, und wobei sich zwischen dem Rotor und den Statorsegmenten jeweils ein Luftspalt befindet.

Aus der DE 10 2006 036 707 B3 ist ein elektrischer Antrieb mit einem speziell gestalteten Stator und einem scheibenförmigen, mit Permanentmagneten bestückten Rotor bekannt. Zur Erzielung einer möglichst hohen magnetischen Flussdichte sollte der Luftspalt zwischen dem Rotor und dem Stator möglichst klein gehalten werden. Dies erfordert jedoch eine präzise Lagerung des Rotors, damit dieser auch bei Stößen oder Erschütterungen frei und rund läuft.

In der DE 10 2008 050 832 A1 ist eine Lagerungsanordnung für einen Rotor beschrieben, welche wenigstens ein Rotorlager aufweist, das in einem radial von der Rotationsachse beabstandeten Bereich mit dem Rotor in Wirkverbindung steht. Diese Lagerungsanordnung soll sicherstellen, dass die Rotorwelle und der an ihr befestigte Rotor in der vorgesehenen Position gehalten werden.

Aus Drehmomentgründen werden Rotor und Stator häufig so ausgeführt, dass der Luftspalt zwischen dem Rotor und dem Stator einen großen radialen Abstand von der Rotorwelle besitzt. Der Luftspalt zwischen den magnetisch aktiven Bereichen des Rotors und des Stators soll dabei zur Maximierung der magnetischen Flussdichte möglichst minimiert werden. Andererseits wird bei einem Scheibenläufer die Minimierung des Luftspalts durch die nicht vollständige Planheit der Rotorscheibe und leichte Taumelbewegungen der Rotorscheibe begrenzt. Bei einem sehr geringen Luftspalt zwischen Rotor und Stator besteht die Gefahr, dass der Rotor nicht mehr berührungsfrei läuft. Der Luftspalt wird daher im Stand der Technik so groß gewählt, dass sich der Rotor auch bei den zu erwartenden Unebenheiten und Unwuchten des Rotors immer noch berührungsfrei drehen kann. Hinsichtlich der magnetischen Flussdichte ist dies allerdings nicht optimal.

Aufgabe der vorliegenden Erfindung ist es daher, eine elektrische Maschine zu entwickeln, bei der der Luftspalt optimiert ist. Ferner soll ein entsprechendes Verfahren zum Betreiben einer solchen Maschine aufgezeigt werden.

Diese Aufgabe wird durch eine elektrische Maschine mit einem Stator und einem Rotor gelöst, wobei der Stator mindestens zwei Statorsegmente umfasst, und wobei der Rotor mit einer Rotorwelle verbunden ist, wobei der Rotor und/oder die Rotorwelle in einer Lagerung drehbar gelagert sind, und wobei die Statorsegmente in Rotationsrichtung des Rotors relativ zu der Lagerung unbeweglich angeordnet sind, und welche dadurch gekennzeichnet ist, dass mindestens eines der Statorsegmente in axialer und/oder radialer Richtung relativ zu der Lagerung beweglich angeordnet ist.

Das erfindungsgemäße Verfahren zum Betreiben einer elektrischen Maschine, welche einen Stator und einen Rotor besitzt, und wobei der Rotor mit einer Rotorwelle verbunden ist, wobei der Rotor und/oder die Rotorwelle in einer Lagerung drehbar gelagert sind, wobei der Stator mindestens zwei Statorsegmente umfasst, welche in Rotationsrichtung des Rotors relativ zu der Lagerung unbeweglich angeordnet sind, und wobei sich zwischen dem Rotor und den Statorsegmenten jeweils ein Luftspalt befindet, ist dadurch gekennzeichnet, dass mindestens eines der Statorsegmente in axialer und/oder radialer Richtung relativ zu der Lagerung bewegt wird, um den Luftspalt zwischen dem Statorsegment und dem Rotor einzustellen.

Die Erfindung dreht das übliche Konstruktionsprinzip von elektrischen Maschinen um: Das oder die Statorsegmente sind nicht starr fixiert und relativ zu der Lagerung des Rotors oder der Rotorwelle unbeweglich, sondern werden in axialer und/oder radialer Richtung relativ zu der Lagerung beweglich angeordnet. Das Statorsegment kann sich damit in axialer und/oder radialer Richtung relativ zum Rotor ausrichten. Das heißt, dass sich erfindungsgemäß das oder die Statorsegmente am Rotor ausrichten bzw. ausgerichtet werden. Bisher war es dagegen üblich, den Rotor in Bezug auf den fest installierten Stator auszurichten.

Der Stator weist erfindungsgemäß mindestens zwei Statorsegmente auf, die relativ zueinander beweglich sind und von denen mindestens eines der Statorsegmente relativ zu der Lagerung der Rotorwelle oder der Lagerung des Rotors beweglich angeordnet ist.

Der Stator weist eine Vielzahl von Statorzähnen auf, die im Wesentlichen auf einem Kreis angeordnet sind. Unter dem Begriff Statorzähne sollen alle Arten von den magnetischen Fluss leitenden Vorsprüngen, Nuten, Ein- oder Ausbuchtungen des Stators verstanden werden. Der Begriff Statorsegment soll insbesondere einen Teil des Stators bezeichnen, der nicht alle, sondern nur einen Teil der Statorzähne umfasst. Der Stator ist in zwei oder mehr Statorsegmente unterteilt, wobei sich die Statorsegmente bezüglich der Anzahl der zugehörigen Statorzähne vorzugsweise um weniger als 5, weniger als 3 oder um maximal 1 unterscheiden.

Im Hinblick auf die Luftspaltbreite ist es theoretisch günstig, jeden Statorzahn einzeln beweglich auszuführen, das heißt, pro Statorsegment genau einen Statorzahn vorzusehen und jedes Statorsegment in axialer und/oder radialer Richtung beweglich auszuführen. Dies erfordert in der Praxis jedoch einen hohen Aufwand und ist aus Fertigungs- und Kostengründen in der Regel nicht umsetzbar. Die Segmentlänge in Umlaufrichtung wird daher so gewählt, dass sie noch mit der erforderlichen Präzision hergestellt werden kann.

Die Erfindung beruht auf dem Grundgedanken, den Luftspalt zwischen einem bestimmten Statorsegment und dem Rotor dadurch einzustellen, dass die Position des Statorsegments relativ zum Rotor variiert wird.

In einer Ausführungsform der Erfindung ist die Maschine als Axialflussmaschine ausgebildet, bei der Rotor und Stator in axialer Richtung um die Luftspaltbreite beabstandet sind. Die Axialflussmaschine kann entweder Statorsegmente auf beiden Seiten des Rotors oder auf nur einer Seite des Rotors aufweisen. Insbesondere ist die Axialflussmaschine als Scheibenläufer ausgeführt. Bei einer Axialflussmaschine erstreckt sich der Luftspalt zwischen Rotor und Stator in axialer Richtung. Schon geringfügige Unebenheiten des Rotors oder eine Unwucht des Rotors führen dazu, dass die Luftspaltbreite über den Umfang des Rotors variiert, wenn nicht geeignete Gegenmaßnahmen ergriffen werden. Erfindungsgemäß werden daher das oder die Statorsegmente in axialer Richtung beweglich ausgeführt.

Das erfindungsgemäße Konzept wird im Folgenden beispielhaft anhand einer Scheibenläufermaschine erläutert. Der in diesem Fall als Scheibe ausgeführte Rotor ist drehstarr mit der Rotorwelle verbunden, so dass ein Drehmoment vom Rotor auf die Rotorwelle und umgekehrt übertragen wird. Insbesondere kann der Rotor fest mit der Rotorwelle verbunden sein. Die Rotorwelle und/oder der Rotor sind hierbei in einer oder mehreren Lagerungen drehbar gelagert.

Der Stator weist mindestens zwei Statorsegmente auf, von denen mindestens eines, vorzugsweise alle Statorsegmente, in axialer Richtung relativ zur Rotorwelle und relativ zum Rotor beweglich angeordnet sind. Auf diese Weise kann durch Verschiebung, Verkippung oder allgemein durch Positionsänderung eines Statorsegments der Abstand und damit der Luftspalt zwischen diesem Statorsegment und dem an das Statorsegment angrenzenden Teil des Rotors geändert werden. Bei einer Unebenheit des Rotors kann das Statorsegment beispielsweise so nachgeführt werden, dass der Luftspalt konstant bleibt. Andererseits sind die Statorsegmente in Rotationsrichtung des Rotors relativ zur Lagerung der Rotorwelle oder des Rotors fixiert, um die gewünschte Kraftübertragung zwischen Rotor und Stator zu gewährleisten.

Unebenheiten des Rotors und eventuelle Taumelbewegungen des Rotors stellen damit grundsätzlich keinen beschränkenden Faktor für den Luftspalt dar. Wenn sich der Luftspalt zwischen einem Statorsegment und dem Rotor aufgrund dessen nicht vollständiger Planheit größer als ursprünglich einstellt, wird das betreffende Statorsegment näher an den Rotor herangebracht, so dass der Luftspalt wieder die ursprünglich vorgesehene Breite erreicht. Umgekehrt kann ein Statorsegment auch in axialer Richtung von dem Rotor wegbewegt werden, wenn der Luftspalt zu gering zu werden droht.

Das beschriebene erfindungsgemäße Konzept, die Statorsegmente so an den Rotor anzupassen, dass der Luftspalt die gewünschte Größe annimmt, gilt nicht nur für

Axialflussmaschinen mit Rotorscheibe, sondern allgemein für Axialflussmaschinen und auch für Radialflussmaschinen.

Befindet sich der Luftspalt radial zwischen den Statorsegmenten und dem Rotor, wie dies bei einer Innen- oder Außenläufermaschine der Fall ist, so sind die Statorsegmente in radialer Richtung beweglich auszuführen. Eine unrunde Drehbewegung des Rotors kann dann durch entsprechendes Nachjustieren der Statorsegmente ausgeglichen werden.

Die Erfindung hat neben der Möglichkeit, den Luftspalt über das bisher übliche Maß hinaus zu minimieren, den weiteren Vorteil der einfacheren Fertigung. Der Rotor wird mit der Rotorwelle verbunden und beispielsweise in dem Maschinengehäuse gelagert. Die Statorsegmente werden dann relativ zum Rotor ausgerichtet und justiert.

In einer weiteren Ausführungsform der Erfindung besitzt die elektrische Maschine zwei oder mehr Rotoren, die auf einer gemeinsamen Rotorwelle sitzen. Solche Maschinen stellen bisher hohe Anforderungen an die Fertigungsgenauigkeit. Rotoren und Statoren müssen präzise montiert werden, so dass die jeweiligen Luftspalte zwischen den Rotoren und Statoren möglichst klein sind, wobei aber alle Rotoren frei laufen sollen. Die Erfindung ermöglicht hierbei die Einstellung des Luftspalts, nachdem der oder die Rotoren und alle Statorsegmente montiert sind.

Das oder die Statorsegmente können entweder für einen bestimmten Rotor einmalig einjustiert werden oder, bevorzugt, dynamisch nachgestellt werden. Im ersten Fall werden der Rotor und die Statorsegmente in der elektrischen Maschine montiert und anschließend jedes einzelne bewegliche Statorsegment so in seiner Position variiert, dass der Luftspalt zwischen dem Rotor und dem Statorsegment minimiert wird. Diese Ausführungsform ermöglicht den Ausgleich von Statorunebenheiten oder einer nicht exakt planen Montage der Statorsegmente.

Vorzugsweise werden das oder die Statorsegmente jedoch dynamisch nachgeführt. Die Position des beweglichen Statorsegments wird während der Rotation des Rotors kontinuierlich oder schrittweise so geändert, dass die Luftspaltbreite einem vorgegebenen Wert entspricht oder in einen vorgegebenen Bereich fällt. Diese Ausführungsform hat den Vorteil, dass auch zeitliche Änderungen des Luftspalts, das heißt Änderungen der Luftspaltbreite während der Rotation des Rotors und / oder abhängig von der Stellung des Rotors, ausgeglichen werden.

Bei PKW-Motoren mit einer Geschwindigkeit von beispielsweise 6000 Umdrehungen pro Minute, entsprechend 100 Umdrehungen pro Sekunde, kann die zeitliche Variation der Luftspaltbreite im Bereich von 2 bis 3 Millisekunden liegen. Das System zum Nachführen der Statorsegmente muss entsprechend schneller reagieren und dann beispielsweise eine Zeitkonstante von 250 Mikrosekunden aufweisen.

Dieses dynamische Nachjustieren der Statorsegmente ist insbesondere bei Motoren oder Generatoren von Vorteil, bei denen nur relativ langsame Umfangsgeschwindigkeiten erreicht werden und damit die zeitliche Variation der Luftspaltbreite langsam im Vergleich zu dem System zur Nachführung der Statorsegmente ist. Diese Variante wird daher beispielsweise bevorzugt bei Windkraftanlagen eingesetzt.

In einer Ausführungsform der Erfindung wird der Luftspalt zwischen dem Statorsegment und dem Rotor während des Betriebs der elektrischen Maschine gemessen und das Statorsegment aktiv nachgeführt, so dass der Luftspalt die gewünschte Breite besitzt. Hierzu kann eine Messeinrichtung vorgesehen sein, welche die aktuelle Luftspaltbreite bestimmt. In Abhängigkeit von dem ermittelten Wert wird das Statorsegment mittels einer Nachführeinheit entweder näher an den Rotor herangeführt oder von diesem weg bewegt.

In einer anderen Ausführungsform wird das Statorsegment mit einer Kraft beaufschlagt, welche so gewählt wird, dass das Statorsegment immer die passende Position einnimmt und sich ein Luftspalt mit der gewünschten Breite einstellt. Im Betrieb der elektrischen Maschine tritt eine anziehende magnetische Kraft zwischem dem Stator und dem Rotor bzw. zwischen einem Statorzahn und dem magnetischen Gegenstück auf dem Rotor, beispielsweise einem Permanentmagneten, auf. Von Vorteil wird das Statorsegment zusätzlich mit einer kurzreichweitigen Kraft beaufschlagt, welche das Statorsegment vom Rotor weg zu bewegen sucht. Die kurzreichweitige Kraft wird so gewählt, dass diese bei einem Abstand von Statorsegment und Rotor, der geringer als die gewünschte Luftspaltbreite ist, größer als die anziehende magnetische Kraft zwischen Statorsegment und Rotor ist. Die kurzreichweitige Kraft bewirkt damit, dass sich das Statorsegment vom Rotor entfernt und sich der Luftspalt vergrößert. Umgekehrt soll die kurzreichweitige Kraft bei einem Abstand von Statorsegment und Rotor, der größer als die gewünschte Luftspaltbreite ist, kleiner als die anziehende magnetische Kraft zwischen Statorsegment und Rotor sein. Auf diese Weise überwiegt bei einem solchen Abstand die anziehendende magnetische Kraft und das Statorsegment wird wieder näher an den Rotor gebracht.

Der Luftspalt zwischen den magnetisch aktiven Bereichen des Rotors und des Stators wird vorzugsweise so eingestellt, dass der Abstand zwischen dem Rotor und dem betreffenden Statorsegment zwischen 5 Mikrometer und 1000 Mikrometer, weniger als 500 Mikrometer, weniger als 300 Mikrometer, weniger als 100 Mikrometer oder weniger als 50 Mikrometer beträgt. Die kurzreichweitige Kraft hat dann eine entsprechende Reichweite.

Der magnetisch aktive Luftspalt zwischen Rotor und Stator, d.h. der Luftspalt zwischen den magnetisch aktiven Bereichen des Rotors und des Stators, und der Luftspalt an der Stelle, an der die kurzreichweitige Kraft wirkt, müssen nicht zwangsläufig identisch sein. Insbesondere wenn eine kurzreichweitige Kraft gewählt wird, die sehr stark mit dem Abstand abnimmt, kann es von Vorteil sein, die kurzreichweitige Kraft nicht direkt am magnetisch aktiven Luftspalt wirken zu lassen, sondern an einer anderen Stelle. Dies kann beispielsweise dadurch erreicht werden, dass der Rotor und / oder der Stator in radialer Richtung abgestuft sind, das heißt, dass sich in einer Ebene senkrecht zur Rotorachse der Abstand zwischen Rotor und Stator in radialer Richtung ändert. Magnetisch aktiver Luftspalt und der für die kurzreichweitige Kraft relevante Luftspalt befinden sich in unterschiedlichem Abstand von der Rotorachse und haben eine unterschiedliche Größe. Die kurzreichweitige Kraft kann dann beispielsweise an einer Stelle ansetzen, an der der Abstand zwischen Rotor und Stator geringer ist als der magnetisch aktive Luftspalt. Dies kann günstig sein, wenn es aus Fertigungsgründen schwierig ist, den für die kurzreichweitige Kraft notwendigen geringen Luftspalt auch im magnetisch aktiven Bereich vorzusehen.

Von Vorteil wird das Statorsegment mit einem Druckluftstrom beaufschlagt, welcher so ausgerichtet ist, dass er eine auf das Statorsegment einwirkende Kraftkomponente besitzt, welche das Statorsegment von dem Rotor abstößt. Beispielsweise wird bei einer Axialflussmaschine ein Druckluftstrom in axialer Richtung auf das Statorsegment gerichtet. Bei einer Radialflussmaschine kann die Druckluft zum Beispiel in radialer Richtung strömen. Bei einem Außenläufer in Radialflussausführung, d.h. einem Radialflussmotor, bei dem die magnetisch aktiven Bereiche des Rotors radial außerhalb des Stators laufen, kann der Druckluftstrom radial nach innen gerichtet sein, um die Statorsegmente nach innen in Richtung der Rotorachse zu drücken. Bei einer als Innenläufer ausgeführten Radialflussmaschine wäre die Strömungsrichtung der Druckluft entsprechend umgekehrt.

Es ist ebenso möglich, den Druckluftstrom nicht auf das Statorsegment, sondern umgekehrt vom Statorsegment auf den Rotor, zu richten. Die auf das Statorsegment wirkende Kraft ändert sich dabei gegenüber der oben beschriebenen Ausführungsform nicht. Der Rotor ist in axialer Richtung fest mit der Rotorachse verbunden. Der auf den Rotor gerichtete Druckluftstrom ruft eine auf das Statorsegment wirkende Gegenkraft hervor, welche das in axialer Richtung bewegliche Statorsegment wie oben beschrieben ausrichtet.

Der Druckluftstrom wird beispielsweise mit einem Druck zwischen 2 und 12 bar oder zwischen 3 und 10 bar auf das Statorsegment gerichtet.

In einer anderen Ausführungsform der Erfindung wird das Statorsegment mittels einer weiteren magnetischen Kraft bewegt. Grundsätzlich kann eine anziehende Magnetkraft, welche das Statorsegment in die gewünschte Position zieht, oder eine abstoßende Magnetkraft, welche das Statorsegment in die gewünschte Position drückt, vorgesehen werden. Von Vorteil wird eine anziehende Magnetkraft verwendet. In der Praxis wird diese Ausführungsform meist mit einer Messung des Luftspalts kombiniert. Die anziehende Magnetkraft wird, beispielsweise mittels eines Elektromagneten, in Abhängigkeit von dem gemessenen Luftspalt aktiv so nachgeregelt, dass sich der gewünschte Luftspalt einstellt.

Die Erfindung zeigt ihre Vorteile insbesondere bei großen elektrischen Maschinen mit einem Rotordurchmesser von mehr als 0,5 Meter, mehr als 1 Meter, mehr als 3 Meter oder mehr als 5 Meter. Geht man von der Faustformel aus, dass der Luftspalt zur Kompensation der Exzentrität der Rotorlagerung, thermischer Toleranzen, usw., mindestens ein tausendstel des Rotordurchmessers sein sollte, so ergeben sich im Stand der Technik bei großen Rotoren Luftspalte von mehreren Millimetern. Erfindungsgemäß kann dagegen der Luftspalt auf deutlich weniger als 1 Millimeter reduziert werden.

Die Erfindung eignet sich insbesondere für elektrische Maschinen in Axialflussbauweise mit scheibenförmigem Rotor, das heißt mit einem Rotor, dessen Ausdehnung parallel zur geometrischen Achse des Rotors, d.h. dessen axiale Ausdehnung, geringer ist als dessen Ausdehnung in radialer Richtung. Der Durchmesser des Rotors ist vorzugsweise mindestens dreimal, mindestens fünfmal oder mindestens zehnmal so groß wie dessen Dicke, d.h. wie dessen axiale Ausdehnung.

In einer weiteren bevorzugten Ausführungsform ist der Rotor mit einer Vielzahl von Permanentmagneten versehen. Die Permanentmagnete können beispielsweise auf den Rotor aufgeklebt sein oder, bevorzugt, in entsprechende Aussparungen im Rotor eingebracht, eingeklebt oder einlaminiert sein. Alle Permanentmagnete können sich in einem festen radialen Abstand vom Rotormittelpunkt, d.h. von der geometrischen Achse des Rotors, befinden. Es ist ebenso möglich, die Permanentmagnete in mehreren konzentrischen Kreisen um den Rotormittelpunkt anzuordnen.

Die Erfindung ermöglicht die Minimierung der Luftspaltbreite und damit eine Maximierung der magnetischen Flussdichte. Selbst wenn sich im Betrieb Bauteile thermisch ausdehnen, stellt sich der Luftspalt korrekt ein. Der Rotor bleibt unbeeinflusst von Vibrationen und Schwingungen der Rotorwelle und von Stößen auf die Rotorwelle. Auch Verkippungen oder Verwindungen der Rotorwelle stören den Rundlauf des Rotors nicht.

Die Erfindung bezieht sich insbesondere auch auf Elektromotoren, deren Rotor aus einem Carbonwerkstoff, Kunststoffmaterial oder einem Verbundwerkstoff, insbesondere einem Faserverbundwerkstoff, gefertigt ist. Solche Motoren werden beispielsweise in der eingangs genannten DE 10 2006 036 707 B3 beschrieben.

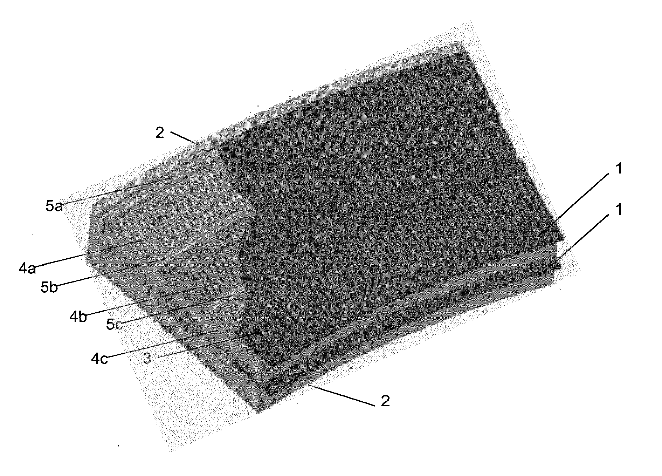

Die Erfindung sowie weitere Einzelheiten der Erfindung werden im Folgenden anhand der schematischen Zeichnung näher erläutert. Hierbei zeigt
- Figur 1: einen Ausschnitt aus einem erfindungsgemäßen Elektromotor.

In Figur 1 ist ein Querschnitt durch einen Teil eines erfindungsgemäßen Elektromotors dargestellt. Der Elektromotor ist als Scheibenläufer mit zwei Rotorscheiben 1 ausgeführt. Die Rotorscheiben 1 weisen jeweils drei konzentrische Reihen von Aussparungen 3 auf, in die Permanentmagnete eingesetzt werden. Die Permanentmagnete stellen die magnetisch aktiven Bereiche der Rotorscheiben 1 dar. Die in der Figur nicht gezeigte Rotorachse ist in y-Richtung ausgerichtet.

Der Elektromotor umfasst mehrere kreissegmentförmige Statorsegmente 2, die im Wesentlichen parallel zu den Rotorscheiben 1 ausgerichtet sind. Die Statorsegmente 2 umfassen jeweils drei Reihen 4a, 4b, 4c von Statorzähnen, welche kreissegmentförmig um die Rotorachse angeordnet sind. Radial angrenzend an die Reihen 4a, 4b, 4c sind jeweils Druckluftdüsen 5a, 5b, 5c vorgesehen. Die Statorsegmente 2 sind relativ zur Rotorachse in Richtung der y-Achse beweglich ausgeführt.

Der Abstand zwischen den Statorsegmenten 2 und den Rotorscheiben 1 kann durch entsprechende Verschiebung der Statorsegmente 2 geändert werden, wodurch der Luftspalt zwischen den magnetisch aktiven Bereichen der Rotorscheiben 1 und den Statorzähnen 4a, 4b, 4c entsprechend vergrößert oder verkleinert werden kann. Hierzu wird über die Druckluftdüsen 5a, 5b, 5c jeweils ein Druckluftstrom auf die Rotorscheibe 1 gerichtet. Da die Rotorscheibe 1 fest mit der Rotorachse verbunden ist, die Statorsegmente 2 jedoch axial beweglich zur Rotorachse ausgeführt sind, üben die Druckluftströme eine in axialer Richtung auf die Statorsegmente wirkende Kraft aus.

Die Statorsegmente 2 weisen im Bereich der Druckluftdüsen 5a, 5b, 5c jeweils einen Vorsprung auf, so dass sich die Druckluftdüsen 5a, 5b, 5c in axialer Richtung näher an der angrenzenden Rotorscheibe 1 befinden als die Statorzähne 4a, 4b, 4c.

Die in den Aussparungen 3 befindlichen Permanentmagnete üben im Betrieb des Elektromotors über die Statorzähne 4a, 4b, 4c eine anziehende Kraft auf die Statorsegmente 2 aus. Dieser anziehenden Kraft wirkt die abstoßende Kraft der Druckluftströme entgegen.

Diese abstoßende Kraft der Druckluftströme ist nur kurzreichweitig, so dass bei größerem Abstand zwischen der Rotorscheibe 1 und dem benachbarten Statorsegment 2 die anziehende magnetische Kraft überwiegt. Wenn jedoch der Abstand zwischen der Rotorscheibe 1 und dem Statorsegment 2 einen bestimmten Minimalwert unterschreitet, so überwiegt die abstoßende Kraft. In diesem Fall wird das Statorsegment 2 von der Rotorscheibe 1 wegbewegt, so dass der zwischen der Rotorscheibe 1 und dem Statorsegment 2 befindliche Luftspalt vergrößert wird. Durch geeignete Einstellung des Drucks der aus den Druckluftdüsen 5a, 5b, 5c ausströmenden Druckluftströme kann der Luftspalt auf den gewünschten Wert eingestellt und während des Betriebs gehalten werden. Bei einer Änderung des Luftspalts, beispielsweise aufgrund von thermischen Schwankungen oder einer leichten Unwucht der Rotorscheibe 1, verschiebt sich das Statorsegment unmittelbar so in axialer Richtung, dass der ursprüngliche Luftspalt wieder hergestellt wird.

## Patentansprüche

1. Elektrische Maschine mit einem Stator und einem Rotor, wobei der Stator mindestens zwei Statorsegmente umfasst, und wobei der Rotor mit einer Rotorwelle verbunden ist, wobei der Rotor und/oder die Rotorwelle in einer Lagerung drehbar gelagert sind, und wobei die Statorsegmente in Rotationsrichtung des Rotors relativ zu der Lagerung unbeweglich angeordnet sind, **dadurch gekennzeichnet, dass** mindestens eines der Statorsegmente in axialer und/oder radialer Richtung relativ zu der Lagerung beweglich angeordnet ist.

2. Elektrische Maschine nach Anspruch 1, **dadurch gekennzeichnet, dass** alle Statorsegmente in axialer und/oder radialer Richtung relativ zu der Lagerung beweglich angeordnet sind.

3. Elektrische Maschine nach Anspruch 1 oder 2, **dadurch gekennzeichnet, dass** die Maschine als Axialflussmaschine ausgeführt ist.

4. Elektrische Maschine nach Anspruch 1 oder 2, **dadurch gekennzeichnet, dass** die Maschine als Radialflussmaschine ausgeführt ist.

5. Elektrische Maschine nach einem der vorhergehenden Ansprüche, **dadurch gekennzeichnet, dass** der Rotor scheibenförmig ausgebildet ist.

6. Elektrische Maschine nach einem der vorhergehenden Ansprüche, **dadurch gekennzeichnet, dass** zwei oder mehr Rotoren vorgesehen sind.

7. Elektrische Maschine nach einem der vorhergehenden Ansprüche, **dadurch gekennzeichnet, dass** mindestens eine Druckluftzuführung vorgesehen ist, über die eine Druckluftströmung so auf das beweglich angeordnete Statorsegment gerichtet werden kann, dass sich das Statorsegment in axialer und/oder radialer Richtung bewegt.

8. Elektrische Maschine nach einem der vorhergehenden Ansprüche, **dadurch gekennzeichnet, dass** ein Detektor zur Bestimmung des Luftspaltes zwischen dem Rotor und dem beweglich angeordneten Statorsegment vorgesehen ist und dass die axiale und/oder radiale Position des beweglich angeordneten Statorsegments in Abhängigkeit von dem bestimmten Luftspalt eingestellt wird.

9. Elektrische Maschine nach einem der vorhergehenden Ansprüche, **dadurch gekennzeichnet, dass** der Rotor einen Umfang von mehr als 0,5 Meter, mehr als 1 Meter, mehr als 3 Meter oder mehr als 5 Meter hat.

10. Verfahren zum Betreiben einer elektrischen Maschine, welche einen Stator und einen Rotor besitzt, und wobei der Rotor mit einer Rotorwelle verbunden ist, wobei der Rotor und/oder die Rotorwelle in einer Lagerung drehbar gelagert sind, wobei der Stator mindestens zwei Statorsegmente umfasst, welche in Rotationsrichtung des Rotors relativ zu der Lagerung unbeweglich angeordnet sind, und wobei sich zwischen dem Rotor und den Statorsegmenten jeweils ein Luftspalt befindet, **dadurch gekennzeichnet, dass** mindestens eines der Statorsegmente in axialer und/oder radialer Richtung relativ zu der Lagerung bewegt wird, um die Breite des Luftspalts zwischen dem Statorsegment und dem Rotor einzustellen.

11. Verfahren nach Anspruch 10, **dadurch gekennzeichnet, dass** der Luftspalt zwischen dem mindestens einem Statorsegment und dem Rotor gemessen wird und das Statorsegment in Abhängigkeit von dem gemessenen Wert bewegt wird.

12. Verfahren nach Anspruch 10 oder 11, **dadurch gekennzeichnet, dass** das mindestens eine Statorsegment mit einer kurzreichweitigen Kraft beaufschlagt wird, welche das Statorsegment von dem Rotor weg bewegt.

13. Verfahren nach Anspruch 12, **dadurch gekennzeichnet, dass** das Statorsegment mit Druckluft beaufschlagt wird.

14. Verfahren nach Anspruch 13, **dadurch gekennzeichnet, dass** die Druckluft einen Druck zwischen 2 und 12 bar oder zwischen 3 und 10 bar, aufweist.
